# EUROPEAN PATENT APPLICATION

(11) **EP 2 200 350 A1**
(43) Date of publication of application: **23.06.2010**
(21) Application number: 08800910.5
(22) Date of filing: 18.09.2008
(51) Int. Cl.: H04W 4/00

(54) **REALIZATION METHOD FOR SELECTING NETWORK SERVICE PROVIDER BY TERMINAL**

(30) Priority: 29.09.2007 CN 200710181055
(71) Applicant: ZTE Corporation, Shenzhen, Guangdong 518057 (CN)
(72) Inventor: CHU, Li, Guangdong 518057 (CN); SONG, Jianquan, Guangdong 518057 (CN); XU, Ling, Guangdong 518057 (CN)
(74) Representative: Vossius & Partner
(86) International application number: PCT/CN2008/072416
(87) International publication number: WO 2009/043265

(57) **Abstract**

The present invention discloses a method for implementing selecting a network service provider by a terminal, the method includes: during the process of the terminal performing a network discovering and selecting based on predetermined information, the terminal acquiring a network service provider list; performing the operation of selecting the network service provider; and after the network service provider has been selected, performing the subsequent process of network discovering and selecting. With the present invention, a subscriber is provided sufficiently with the chance to select a network service provider according to his own mind, and to perform network discovering and selecting to enter into the network.

## Description

### Field of the Invention

The present invention relates to communication field, in particular to a method for implementing selecting a network service provider by a terminal.

### Background of the Invention

As the development of the communication industry, users are enjoying a variety of services with better experience. In the Worldwide Interoperability for Microwave Access (WiMAX) wireless communication field, a Network Access Provider (NAP) and a Network Service Provider (NSP), which could be service providers independent of each other, are introduced. The NAP is a business entity that provides a WiMAX radio access infrastructure to one or more WiMAX Network Service Providers (NSPs), while the NSP is a business entity that provides an IP connectivity and WiMAX services to WiMAX subscribers compliant with the Service Level Agreement which is established by the WiMAX subscribers. In order to provide these services, an NSP establishes a contractual agreement with one or more NAPs. In addition, to provide the subscribers with the WiMAX services, an NSP may also establish a roaming agreement with other NSPs and a contractual agreement with a third party application provider (e.g., ASP or ISP). Various NSPs may provide the subscribers with diversified services such as various user levels and various charges through the same NAP.

In order to enable the subscribers to have a right to select an NSP, besides providing a mode of automatically selecting an NSP, the current network working group (NWG for short, which is one working group of the WiMAX standard organization responsible for the tasks related to network technology of the WiMAX system) standard of the WiMAX also provides a mode of manually selecting an NSP during network discovering and selecting.

There are 3 cases in the network discovering and selecting. The first case is the network discovering and selecting process based on the configuration information of prior base stations stored in a terminal; the second case is the network discovering and selecting process based on general, the account subscription defined configuration information stored in a terminal; and the third case is the network discovering and selecting process based on the physical scanning capabilities of a terminal device, without being dependent on the stored configuration information.

During the network discovering and selecting process, the network will detect and select a suitable NAP and a suitable NSP so as to enable the terminal to access the network. In the first and the second network discovering and selecting process mentioned above, after acquiring an NSP list, the terminal enters the subsequent network accessing process without providing the a user with the chance to select an NSP manually.

At present, user experience is of great importance for communication service providers. Better experience can have a bigger attraction to subscribers. In most application circumstances, the network discovering and selecting occurs in the first and the second network discovering and selecting processes mentioned above, resulting in that in most circumstances, before the terminal enters the network, a user has no chance to select an NSP, in other words, the subscriber has no chance to select a favorable one from diversified services before he accesses the network. It can, without doubt, impair the user experience drastically.

Therefore, a method enabling a user to manually select a desired NSP is needed, so as to improve user experience.

### Summary of the Invention

The present invention is directed to provide a method for implementing selecting a network service provider by a terminal, to solve the problem of unsatisfied user experience resulted from that a user can not select an NSP in most of the circumstances in the current WiMAX communication system.

According to one aspect of the present invention, a method for selecting a network service provider is provided, which is used to select a network service provider by a terminal. The method comprises: during the process of the terminal performing a network discovering and selecting based on predetermined information, the terminal acquiring a network service provider list; performing the operation of selecting the network service provider based on the network service provider list; and, after the network service provider has being selected, performing the subsequent process of network discovering and selecting.

The predetermined information can be configuration information of prior base stations stored in the terminal.

The predetermined information can be general, account subscription defined configuration information stored in the terminal.

During the process of the terminal performing the network discovering and selecting based on the predetermined information, if the terminal has not acquired the network service provider list, then the terminal re-acquires the network service provider list based on the predetermined information.

Wherein, the selecting operation comprises a manual selecting mode and an automatic selecting mode.

During the operation of selecting the network service provider, it is determined to use the manual selecting mode or the automatic selecting mode according to related configuration of the terminal or subscriber information.

Preferably, the subscriber information is the service and subscription information provided by the network provider for the subscriber.

According to another aspect of the present invention, a method for selecting a network service provider is provided, which is used to select a network service provider by a terminal. The method comprises: after the terminal has entered a network, the terminal acquiring a network service provider list based on a predetermined operation; performing the operation of selecting the network service provider based on the network service provider list; and after the network service provider has being selected, performing the subsequent process of network entry.

Preferably, the predetermined operation comprises: the terminal initiating a request for the network service provider list, or setting a timer to wait for the information of service provider list sent by the network periodically, or the network actively sending a service provider list.

After the terminal having accessed the network, if the terminal has not acquired the network service provider list, re-acquiring the network service provider list based on the predetermined information.

Wherein, the selecting operation comprises a manual selecting mode and an automatic selecting mode.

The network determines to use the manual selecting mode or the automatic selecting mode according to related configuration of the terminal or subscriber information.

Preferably, the subscriber information is the service and subscription information provided by the network provider for the subscriber.

Through one of the above technical solutions, by adding the process of selecting a network service provider, the present invention solves the problem of unsatisfied user experience resulted from that a subscriber can not select an NSP in most of the circumstances in the current WiMAX communication system, and enables a subscriber to select a network service provider according to his own mind, so that the network discovering and selecting is performed to access a network.

Other features and advantages of the present invention will be illustrated in the following description, and partly apparent therefrom, or be understood by implementing the present invention. The object and other advantages of the present invention will be realized and obtained through the structure specified in the written specification, claims and drawings.

### Brief Description of the Drawings

The drawings are used to provide a further understanding of the present invention and form a part of the specification, and are used to explain the present invention with the embodiments of the present invention without limiting the scope of the present invention, wherein:
Figure 1 is a flow chart of the method for implementing selecting a network service provider by a terminal according to the present invention;
Figure 2 is another flow chart of the method for implementing selecting a network service provider by a terminal according to the present invention;
Figure 3 is a flow chart of the method for selecting a network service provider by a terminal according to the first embodiment of the present invention;
Figure 4 is a flow chart of the method for selecting a network service provider by a terminal according to the second embodiment of the present invention; and
Figure 5 is a flow chart of the method for selecting a network service provider by a terminal according to the third embodiment of the present invention.

### Detailed Description of Embodiments

### Function Overview

In view of the problem of unsatisfied user experience resulted from that a user can not select an NSP in most of the circumstances in the current WiMAX communication system, by adding the process of selecting a network service provider after an NSP list is acquired, the present invention enables the user to select an NSP according to his own mind, thus the user experience is improved.

The preferred embodiments of the present invention will be described in conjunction with the drawings; however, the preferred embodiments described herein are used to illustrate and explain the present invention without unduly limiting the scope of the present invention.

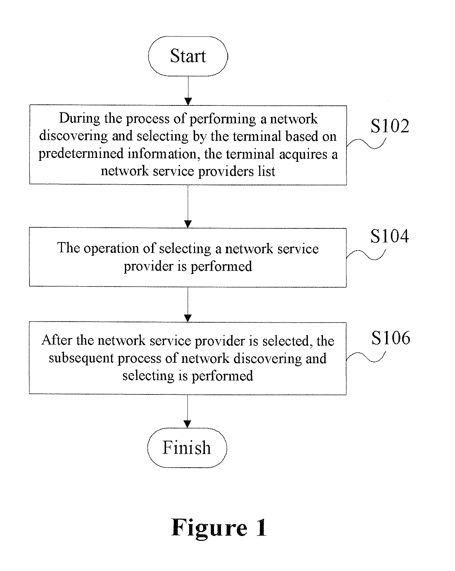

Figure 1 is a flow chart of the method for implementing selecting a network service provider by a terminal according to the present invention.

As shown in Figure 1, the method comprises the following steps: Step S102, during the process of performing the network discovering and selecting by a terminal based on predetermined information, the terminal acquires a network service provider list; Step S104,the operation of selecting a network service provider based on the network service provider list is performed; and Step S106, after the network service provider is selected, the subsequent process of network discovering and selecting is performed.

In a detailed implementing procedure, the predetermined information can be the configuration information of prior base stations stored in the terminal, or general, account subscription defined configuration information stored in the terminal.

In Step S102, if the terminal has not acquired the network service provider list, the terminal re-acquires the network service provider list based on the predetermined information.

Wherein, the selecting operation can be a manual selecting mode or an automatic selecting mode.

A network determines to use the manual selecting mode or the automatic selecting mode according to related configuration of the terminal or subscriber information, wherein, the subscriber information is the service and subscription information provided by the network provider for the subscriber.

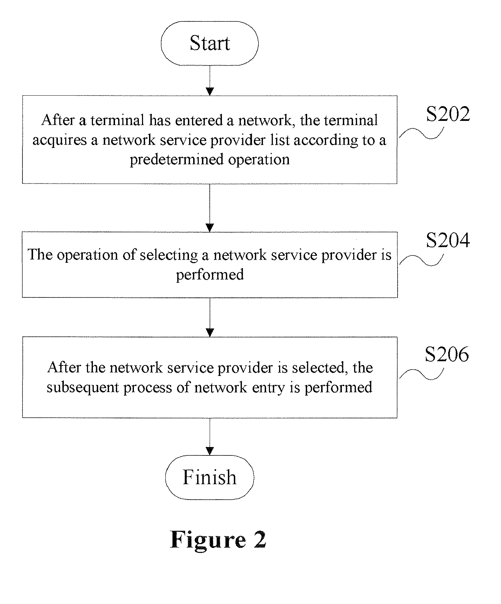

Figure 2 is another flow chart of the method for implementing selecting a network service provider by a terminal according to the present invention.

As shown in Figure 2, the method comprises the following steps: Step S202, after a terminal having entered a network, the terminal acquires a network service provider list according to a predetermined operation; Step S204, based on the network service provider list, the operation of selecting a network service provider is performed; and Step S206, after the network service provider is selected, the subsequent process of network entry is performed.

In the detailed implementing procedure, the above predetermined operation comprises the following operation modes: the terminal actively initiating a request for the network service provider list, or setting a timer to wait for the information of service providers list sent by the network periodically, or the network actively sending a mode of the service providers list.

In Step S202, if the terminal has not acquired the network service provider list, the terminal re-acquires the network service provider list based on the predetermined information.

Wherein, the selecting operation in Step S204 comprises a manual selecting mode and an automatic selecting mode.

The network determines to use the manual selecting mode or the automatic selecting mode according to related configuration of the terminal or subscriber information, wherein the subscriber information can be the service and subscription information provided by the network provider for the subscriber.

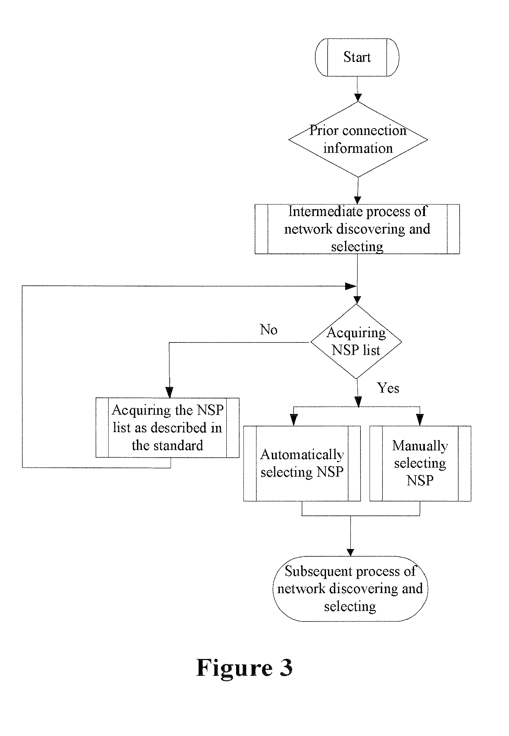

The first to the third embodiments of the present invention will be described in detail hereinafter in conjunction with the Figures 3-5.

### The first embodiment

Figure 3 is a flow chart of the method for selecting a network service provider by a terminal according to the first embodiment of the present invention.

In the current NWG standard, through the first case of network discovering and selecting process, i.e., the network discovering and selecting process is performed based on the configuration information of prior base stations stored in the terminal.

Step one, as described in the standard, the former part of the network discovering and selecting is performed according to the prior connection information, then it is judged whether the NSP list has been acquired or not; if the NSP list has been acquired, the process goes to Step two, otherwise, goes to Step three.

Step two, the selecting of the NSP is performed. Whether to use automatic selecting or manual selecting is determined according to related configuration information, e.g., the related configuration information comprises the related configuration of the terminal or the service and subscription information provided by the network provider for the subscriber; then the process goes to Step four.

Step three, as described in the standard, it is continued to acquire the NSP list, and then it is judged whether the NSP list has been acquired or not.

Step four, after the selecting of the NSP is performed, the subsequent process of network discovering and selecting is performed.

### The second embodiment

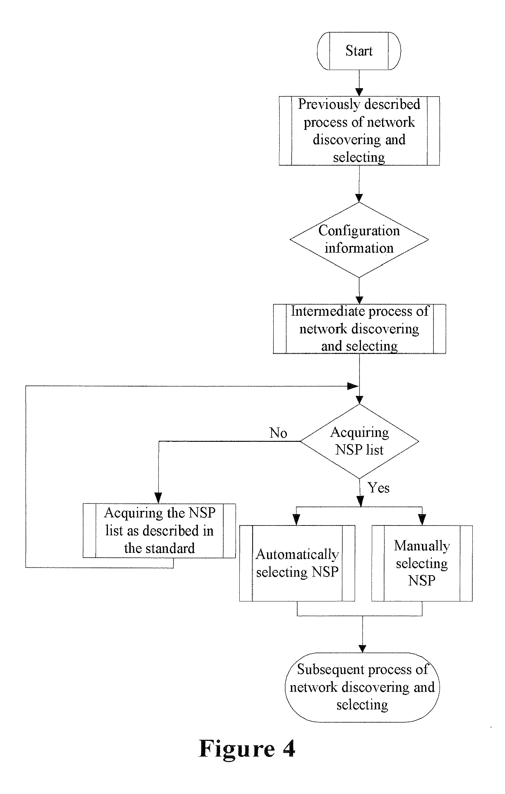

Figure 4 is a flow chart of the method for selecting a network service provider by a terminal according to the second embodiment of the present invention.

In the current NWG standard, through the second case of network discovering and selecting process, i.e., the network discovering and selecting process is performed based on general, account subscription defined configuration information stored in the terminal.

Step one, as described in the standard, the former part of network discovering and selecting is performed according to the prior configuration information, then it is judged whether the NSP list has been acquired or not; if the NSP list has been acquired, the process goes to Step two, otherwise goes to Step three.

Step two, the selecting of the NSP is performed. Whether to use automatic selecting or manual selecting is determined according to related configuration information, e.g., the related configuration information comprises related configuration of the terminal or the service and subscription information provided by the network provider base on the user level; then the process goes to Step four.

Step three, as described in the standard, it is continued to acquire the NSP list, and then it is judged whether the NSP list has been acquired or not.

Step four, after the selecting of the NSP is performed, the subsequent process of network discovering and selecting is performed.

In addition, the methods of the first embodiment and the second embodiment can be used at the same time.

### The third embodiment

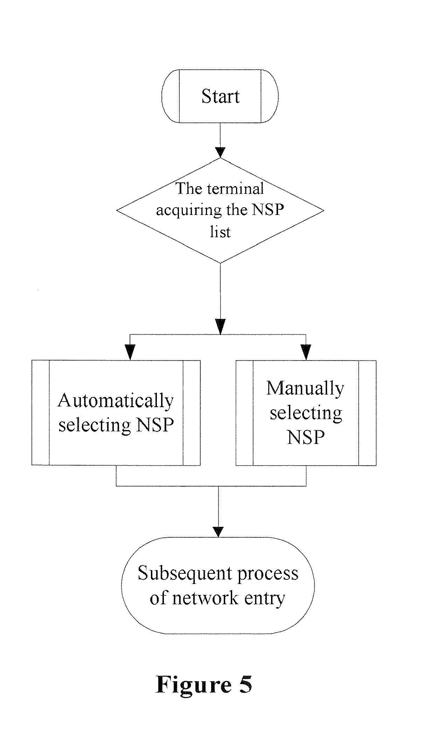

Figure 5 is a flow chart of the method for selecting a network service provider by a terminal according to the third embodiment of the present invention.

After the terminal enters the network, the terminal can actively acquire the NSP list according to the decision of the user, or acquire the NSP list in other ways. After acquiring the NSP list, the terminal can use automatic mode or manual mode to perform the selection of an NSP, so as to receive service through the selected NSP.

Step one, the terminal can acquire the NSP list by one of the following operation modes: the terminal actively initiating a request for the network service provider list, or setting a timer to wait for the information of service providers list sent by the network periodically, or the network actively sending service provider list. If the NSP list is successfully acquired, the process enters into Step two, otherwise, it is continued to acquire the NSP list.

Step two, the selecting of the NSP is performed. Whether to use automatic selecting or manual selecting is determined according to the related configuration information, for example, the network determines to use manual selecting mode or automatically selecting mode according to the related configuration of the terminal or subscriber information. Then, Step three is performed.

Step three, after the selecting of the NSP is performed, the subsequent process of entering the network is performed.

Through the present invention, a subscriber is provided sufficiently with the chance to select a network service provider according to his own mind, and to perform network discovering and selecting to enter into the network.

Above description is only to illustrate the preferred embodiments of the present invention but not to limit the present invention. Various alterations and changes to the present invention are apparent to those skilled in the art. The scope defined in claims shall comprise any modification, equivalent substitution and improvement within the spirit and principle of the present invention.

## Claims

1. A method for selecting a network service provider, for selecting a network service provider by a terminal, **characterized in that** the method comprises:
during the process of the terminal performing a network discovering and selecting based on predetermined information , the terminal acquiring a network service provider list;
performing the operation of selecting the network service provider based on the network service provider list; and
after the network service provider has been selected, performing the subsequent process of network discovering and selecting.

2. The method according to Claim 1, **characterized in that** the predetermined information is the configuration information of prior base stations stored in the terminal.

3. The method according to Claim 1, **characterized in that** the predetermined information is general, account subscription defined configuration information stored in the terminal.

4. The method according to Claim 1, **characterized in that** during the process of the terminal performing the network discovering and selecting based on the predetermined information, if the terminal has not acquired the network service provider list, then the terminal re-acquires the network service provider list based on the predetermined information.

5. The method according to Claim 1, **characterized in that** the selecting operation comprises a manual selecting mode and an automatic selecting mode.

6. The method according to Claim 5, **characterized in that** during the operation of selecting the network service provider, it is determined to use the manual selecting mode or the automatic selecting mode according to related configuration of the terminal or subscriber information.

7. The method according to Claim 6, **characterized in that** the subscriber information is the service and subscription information provided by the network provider for the subscriber.

8. A method for selecting a network service provider, for selecting a network service provider by a terminal, **characterized in that** the method comprises:
after the terminal entering a network, the terminal acquiring a network service provider list according to a predetermined operation;
performing the operation of selecting the network service provider based on the network service provider list; and
after the network service provider has being selected, performing the subsequent process of network entry.

9. The method according to Claim 8, **characterized in that** the predetermined operation comprises: the terminal initiating a request for the network service provider list, or setting a timer to wait for the information of service provider list sent by the network periodically, or the network actively sending a service provider list.

10. The method according to Claim 8, **characterized in that** after the terminal having accessed the network, if the terminal has not acquired the network service provider list, it re-acquires the network service provider list based on the predetermined information.

11. The method according to Claim 8, **characterized in that** the selecting operation comprises a manual selecting mode and an automatic selecting mode.

12. The method according to Claim 11, **characterized in that** it is determined to use the manual selecting mode or the automatic selecting mode according to related configuration of the terminal or subscriber information.

13. The method according to Claim 12, **characterized in that,** the subscriber information is the service and subscription information provided by the network provider for the subscriber.
